# EUROPÄISCHE PATENTSCHRIFT

(11) **EP 2 541 224 B1**
(45) Veröffentlichungstag und Bekanntmachung des Hinweises auf die Patenterteilung: **26.03.2014**
(21) Anmeldenummer: 11171567.8
(22) Anmeldetag: 27.06.2011
(51) Int. Cl.: G01M 3/28

(54) **Verfahren zur Dichtheitskontrolle von Sicherheitsventilen**
Method for checking that safety valves are sealed
Procédé de contrôle d'étanchéité pour soupapes de sécurité

(43) Veröffentlichungstag der Anmeldung: 02.01.2013
(73) Patentinhaber: Elster GmbH, 55252 Mainz-Kastel (DE)
(72) Erfinder: Quatmann, Aloys, 49456 Bakum (DE); Engelmann, Ulrich, 49078 Osnabrück (DE); Borgmann, Oliver, 49477 Ibbenbüren (DE)
(74) Vertreter: Zenz

(56) Entgegenhaltungen:
- DE-A1- 19 831 067
- US-A- 6 057 771

## Beschreibung

Die Erfindung betrifft ein Verfahren zur Kontrolle der Dichtheit von ansteuerbaren Ventilen in einer Gasstrecke. Insbesondere betrifft die Erfindung ein Verfahren, um Undichtheiten an Gasventilen festzustellen, welche entlang einer Gasstrecke als redundante Sicherheitsventile angeordnet sind.

Verschiedene Sicherheitsvorschriften und Normen bestimmen die Auslegung und Konfiguration von Sicherheitseinrichtungen an Gasleitungen wie sie z.B. in industriellen Thermoprozessanlagen eingesetzt werden. Beispielhaft können hier die Sicherheitsanforderungen an Feuerungen und Brennstoffführungssysteme gasbeheizter industrieller Thermoprozessanlagen gemäß DIN EN 746-2 genannt werden. Regelmäßig ist gemäß solcher Vorschriften eine Vorbelüftung eines Brennerraums vor einem Brenner(neu)start erforderlich. Es gibt jedoch zulässige Ausnahmen. So ist nach Regelabschaltungen zur Wiedereinschaltung keine Vorbelüftung erforderlich, wenn der Brenner mit zwei gleichzeitig schließenden Ventilen und einer Dichtheitskontrolleinrichtung (Ventilüberwachungssystem) ausgerüstet ist. Die Dichtheitskontrolle arbeitet als automatisches Überwachungssystem eines Leitungsabschnittes mit Absperrventilen, um ein Signal zur Überprüfung zu geben, wenn die Leckage eines der Ventile die Ansprechgrenze überschreitet.

Gemäß dem Stand der Technik sind verschiedene Ansätze zur Prüfung der Dichtheit bekannt. Die Ventile von entsprechenden Systemen sind entlang einer Gasstrecke, an zwei unterschiedlichen Positionen, stromaufwärts und stromabwärts eines Prüfvolumens angeordnet. Beide Ventile sind ansteuerbar, um eine Sperrung oder Freigabe des Gasdurchlasses zu ermöglichen.

Die Anmelderin setzt seit langem verschiedene Verfahren ein, um die Dichtheitskontrolle zu gewährleisten. Dabei wird üblicherweise ein Druckwächter in der Gasstrecke zwischen den Ventilen eingesetzt, der eine Auslösestelle im Druckbereich zwischen dem stromaufwärts anliegenden Eingangsdruck und dem stromabwärts anliegenden Ausgangsdruck aufweist. Ein entsprechendes Verfahren aus dem Stand der Technik wird unten unter Bezug auf die Zeichnungen näher erläutert.

Außerdem sind Verfahren bekannt, bei denen zwei Druckwächter in der Gasstrecke zwischen den Ventilen eingesetzt werden, welche auch unterschiedliche Auslösedrücke aufweisen können.

Der Stand der Technik bietet demnach Verfahren zum Prüfen einer Dichtheit von zwei ansteuerbaren Ventilen, wobei die Ventile an entgegengesetzten Enden eines Prüfvolumens angeordnet sind. Eingangsseitig, also stromauf des Prüfvolumens, vor einem Ventil V1, liegt ein Eingangsdruck pₑ an. Ausgangsseitig, also stromab des Prüfvolumens, hinter Ventil V2, liegt ein Ausgangsdruck pₐ an. In Verbrennungsanlagen gilt, dass der Eingangsdruck größer als der Ausgangsdruck ist, also pₑ>pₐ und der Druck im Prüfvolumen gleich p_{z} ist. Es gilt das Größenverhältnis pₑ≥ p_{z} ≥pₐ.

Eine Steuereinrichtung ist mit den Ventile zum Ansteuern des Öffnens und Schließens gekoppelt die Steuereinrichtung ist mit mindestens zwei Druckwächtern gekoppelt, die beide zur Drucküberwachung mit dem Prüfvolumen in Wirkverbindung stehen.

Bei einem Verfahren zur Dichtheitsprüfung von Gasventilen gemäß der Druckschrift DE19831067 wird mindestens ein zweites Gasventil beim Starten und mindestens ein erstes Gasventil beim Abschalten des Brenners hinsichtlich der Dichtheit überprüft.

Die US6057771A schlägt vor, eine Strecke zwischen zwei Ventilen mit Druckwächtern zu überwachen, um Undichtigkeiten in den Ventilen zu erfassen. Das Fluid, was bei gesperrten Ventilen in der Strecke eingeschlossen ist, führt bei Erwärmung durch Umgebungwärme zu einer Druckerhöhung. Wird diese nicht detektiert, kann auf eine mangelnde Sperrung der Ventile rückgeschlossen werden.

Ein Nachteil der genannten Verfahren besteht jedoch in ihrer durch die technischen Einrichtungen bedingten Prüfzeiten. Insbesondere bei großen Volumina und größeren Anlagen kann die Prüfdauer erhebliche Zeit in Anspruch nehmen, um einerseits das Volumen zwischen den Ventilen mit dem Eingangsdruck zu beaufschlagen und andererseits den Druck im Prüfvolumen stromabwärts abzulassen. Diese Vorgänge sind erforderlich, um die ordnungsgemäßen Sperrfunktionen der Ventile zu verifizieren.

Aufgabe der Erfindung ist es, ein verbessertes Verfahren zur Dichtheitskontrolle anzubieten, welches bei verkürzter Prüfzeit eine unverändert hohe Sicherheit bietet.

Diese Aufgabe wird gelöst durch ein Verfahren mit den Merkmalen des Patentanspruchs 1.

Das erfindungsgemäße Verfahren der eingangs genannten Art verfolgt einen optimierten Ansatz zur Dichtheitskontrolle.

Zunächst wird der erste Druckwächters auf eine erste Auslöseschwelle d₁ eingestellt, wobei d₁=pₑ/x mit x>2. Der Parameter x gibt einen Bruchteil des Eingangsdruckes an und kann jeden beliebigen Wert haben, braucht also kein ganzzahliger Wert zu sein.

Der zweite Druckwächter wird auf eine zweite Auslöseschwelle d₂ eingestellt, wobei d₂=pₑ(1-1/x). Die Auslöseschwellen sind im Wesentlichen symmetrisch um den halben Eingangsdruck gewählt, einer um einen Betrag gegenüber dem halben Eingangsdruck verringert und einer um denselben Betrag gegenüber dem halben Eingangsdruck erhöht. Diese symmetrische Anordnung ist in der Praxis nicht mathematisch exakt einzuhalten, es ist jedoch im Rahmen der üblichen Toleranzen ein entsprechender Wert mit zugehörigen Auslöseschwellen zu wählen. Diese Einstellung kann einmalig, bei Einrichtung des Systems vorgenommen werden und braucht nicht bei jeder Durchführung des Verfahrens erneut vorgenommen werden.

Zu Beginn jeder Dichtheitskontrolle befinden sich beide Ventile in Sperrstellung.

Erfindungsgemäß wird alternativ eine der folgenden zwei Schrittgruppen abgearbeitet, wobei die Schrittfolgen dieselben Schritte enthalten, diese jedoch in unterschiedlicher Reihenfolge abarbeiten. Grundsätzlich sind beider Schrittfolgen daher gleichwertig, eine anfängliche Auswahl kann jedoch, je nach gewählter Schrittfolge, eine zusätzliche Zeitersparnis erbringen.

Gemäß der ersten Schrittfolge wird zunächst Ventil V1 angesteuert, um dieses für eine Zeitdauer t_{L1} zu öffnen und anschließend wieder zu sperren. Für eine Messdauer t_{M1} wird gewartet und anschließend der zweite Druckwächter abgefragt. Falls gilt p_{z}<d₂ ist es zu einem unzulässigen Druckabfall zwischen den Ventilen V1 und V2 gekommen und das Verfahren wird mit Erkennung der Undichtheit des Ventils V2 abgebrochen.

Ergibt die Auswertung, dass p_{z}≥d₂, der Druck in der Prüfstrecke also oberhalb der Auslöseschwelle des zweiten Sensors gehalten wurde, wird die Ordnungsgemäße Funktion des Ventils V2 festgestellt. Anschließend erfolgt ein Ansteuern des Ventils V2, um dieses für eine Zeitdauer t_{L2} zu öffnen und anschließen zu sperren. Wiederum wird eine Messdauer t_{M2} abgewartet und anschließend der erste Druckwächter abgefragt. Falls gilt p_{z}>d₁ erfolgt ein Abbruch des Verfahrens mit Erkennung der Undichtheit des Ventils V1. In diesem Fall kam es zu einer Druckerhöhung über einen zulässigen Wert trotz der vorherigen Druckentlastung durch Ventil V2.

Falls jedoch gilt p_{z}≤d₁ so ist die Dichtheitskontrolle erfolgreich abgeschlossen.

Gemäß der zweiten Schrittfolge wird das Verfahren in anderer Reihenfolge durchlaufen.

Zunächst wird Ventil V2 angesteuert, um dieses für eine Zeitdauer t_{L2} zu öffnen und anschließen zu sperren. Nach Abwarten einer Messdauer t_{M2} wird der ersten Druckwächters abgefragt und das Verfahren mit Erkennung der Undichtheit des Ventils V1 abgebrochen falls p_{z}>d₁.

Andernfalls, falls p_{z}≤d₁ wird Ventil V1 angesteuert, um dieses für eine Zeitdauer t_{L1} zu öffnen und anschließen zu sperren. Wiederum wird eine Messdauer t_{M1} abgewartet. Anschließend erfolgt ein Abfragen des zweiten Druckwächters und Abbruch des Verfahrens mit Erkennung der Undichtheit des Ventils V2 falls p_{z}<d₂.

Die Anzeige der Funktionstüchtigkeit der Ventile erfolgt, falls kein Abbruch des Verfahrens stattgefunden hat.

Es ist wesentlich, dass die Messdauern t_{M1} und t_{M2} gemäß dem erfindungsgemäßen Verfahren gegenüber den bekannten Konzepten deutlich verkürzt werden können. Regelmäßig werden diese Messdauern identisch t_{M1}=t_{M2}=t_{M} sein, da die Auslösewerte der Sensoren symmetrisch um den halben Eingangsdruck gewählt sind. Indem zwei Druckwächter im Prüfvolumen zwischen den Sicherheitsventilen angeordnet werden, und diese verschiedene, im wesentlichen symmetrische Schaltpunkte bezüglich des halben Eingangsdruckes aufweisen, ist eine raschere Dichtheitsprüfung möglich. Wenn also z.B. der erste Druckwächter eine Auslöseschwelle aufweist, die ¼ des Eingangsdrucks beträgt, weist erfindungsgemäß der zweite Druckwächter einen Wert von etwa ¾ des Eingangsdrucks auf. Es ist unmittelbar ersichtlich, dass die Annäherung der Auslöseschwellen an den Eingangsdruck einerseits und an den Ausgangsdruck andererseits eine höhere Empfindlichkeit der Detektion mit den Druckwächtern ermöglicht. Sofern eine Undichtheit im System besteht, werden die genannten Schwellen rascher überschritten bzw. unterschritten als dies bei dem System mit einem einzigen Druckwächter oder mehreren redundanten Druckwächtern der Fall ist. Die Messzeit t_{M} kann daher deutlich verringert werden.

Vorzugsweise wird die Abfolge der Schritte in Abhängigkeit vom Zustand des Systems bei jeder Dichtheitskontrolle bestimmt.

Es wird zunächst geprüft, ob zu Beginn der Dichtheitskontrolle der erste Druckwächter ein Überschreiten der ersten Auslöseschwelle anzeigt, also p_{z}>d₁. In diesem Fall wird die erste Schrittfolge durchlaufen.

Falls zu Beginn der Dichtheitskontrolle der erste Druckwächter kein Überschreiten der ersten Auslöseschwelle anzeigt, also p_{z}<=d₁, so wird die zweite Schrittfolge durchlaufen.

Da zu Beginn des Verfahrens in Abhängigkeit von dem Zustand des Systems die Abfolge der Ventilprüfungen bestimmt wird, wird auch hier eine Zeitersparnis ohne Beeinträchtigung der Sicherheit gewährleistet. Je nach Druckverhältnissen zwischen den Ventilen wird zunächst die Dichtheit des Ventils V1 oder andererseits die Dichtheit des Ventils V2 geprüft. Dazu wird mittels eines der Druckwächter geprüft, ob sich das Prüfvolumen in etwa auf dem Druckniveau des Ausgangsdrucks bewegt. Ist dies der Fall, wird zunächst die Dichtheit des stromaufwärts liegenden und mit dem Eingangsdruck beaufschlagten Ventils V1 geprüft. Beträgt der Druck im Prüfvolumen jedoch bereits einen signifikant gegenüber dem Ausgangsdruck erhöhten Wert, wird zunächst die Druckdichtheit des stromabwärts gelegenen, gegenüber dem Ausgangsdruck sperrenden Ventils V2 geprüft.

Je nach Wahl der Auslöseschwellen kann eine erhebliche Verkürzung der Messdauer erreicht werden, wobei dann, wenn sich die Auslöseschwellen der Druckwächter immer näher den Drücken jenseits der Ventile annähern, auch das Risiko von Fehlerkennungen besteht.

Besonders vorteilhaft ist es daher, wenn bei dem erfindungsgemäßen Verfahren die Druckschwellen mit einem Parameter x < 10 eingestellt werden. Je nach Auslegung des Systems und der Anlage kann dieser Faktor und die damit verknüpfte Messdauer t_{M} angepasst werden. Die Messdauer ist umso kürzer, je größer der Faktor x gewählt wird.

Es ist durch die einzuhaltenden Vorgaben und technischen Normen vorgeschrieben, dass die Leckage an einem gasführenden System bestimmte Grenzwerte nicht überschreiten darf. Die Messzeit t_{M} ist unter Berücksichtigung der Schaltgenauigkeit der Druckwächter, des zwischen den Sicherheitsventilen befindlichen Volumens, der Druckdifferenz zwischen Eingangs- und Ausgangsseite und der Leitungsquerschnitte sowie der sonstigen Auslegung des System zu bestimmen. In jedem Fall wird jedoch ein deutlich rascheres Verfahren zur Dichtheitskontrolle erreicht, da die symmetrische Auswahl der Auslöseschwellen der Druckwächter einen übermäßigen Anstieg oder Abfall des Drucks im Prüfvolumen deutlich früher meldet als bei einem Druckwächter, der funktionsbedingt etwa mittig auf einen Druckwert zwischen Eingangs- und Ausgangswert abgestimmt ist.

Aus der Formulierung des Patentanspruchs 1 geht hervor, dass die Messdauer und Öffnungszeiten der Ventile je nach gerade geschaltetem Ventil unterschiedlich sein können. Es können jedoch auch für beide Ventile identische Messdauern und Öffnungszeiten gewählt werden. In diesem Fall ist die Konfiguration des Systems äußerst einfach, da nur wenige Parameter einzustellen sind.

Die Erfindung wird nun anhand der beiliegenden Figuren näher erläutert.
Figur 1 beschreibt ein Verfahren und einen Aufbau gemäß dem Stand der Technik, wobei ein Druckwächter zum Einsatz kommt.
Figur 2 zeigt ein Ablaufdiagramm des Verfahrens mit den Mitteln aus Figur 1.
Figur 3 zeigt einen Systemaufbau zur Dichtheitskontrolle gemäß der Erfindung.
Figur 4 zeigt ein Ablaufdiagramm eines Verfahrens gemäß der Erfindung zum Einsatz der Einrichtung aus Figur 3.

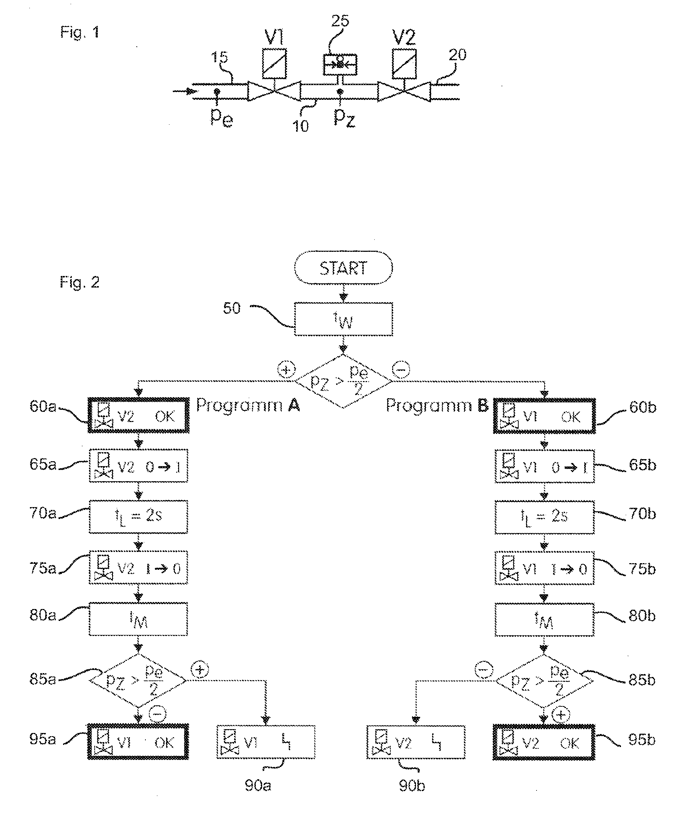

Figur 1 zeigt eine Einrichtung zur Prüfung der Dichtheit von zwei Absperrventilen V1 und V2. Zwischen den Absperrventilen V1 und V2 ist eine Prüfstrecke 10 gebildet. Auf der Einlaufseite der Einrichtung ist eine Zuleitung 15 angeordnet, so dass das Ventil V1 zwischen der Prüfstrecke 10 und der Zuleitung 15 sitzt. Das Ventil V2 sitzt zwischen der Prüfstrecke 10 und der Ableitung 20, welche zu einem Gasverbraucher, z.B. einer Brennereinrichtung führt.

In der Zuleitung 15 steht ein Eingangsdruck pₑ an. Mit dem Volumen der Prüfstrecke 10 ist ein Drucksensor 25 gekoppelt. Bei dieser Einrichtung gemäß dem Stand der Technik wird der Schaltpunkt für den Drucksensor auf den halben Eingangsdruck pₑ/2 eingestellt. Der in der Prüfstrecke 10 befindliche Druck wird mit p_{z} bezeichnet.

Figur 2 zeigt den Ablauf eines Prüfprogramms, wie er gemäß der Einrichtung aus Figur 1 durchführbar ist. Dieser Prüfvorgang gemäß dem Stand der Technik erfolgt in drei Abschnitten, einer anfänglichen Wartezeit, einer Ventil-Öffnungszeit und einer Prüfzeit.

Nach dem Start des Programms verstreicht zunächst eine Wartezeit t_{w} bei Schritt 50. Anschließend wird der Status des Druckwächters 25 abgefragt, falls der in der Prüfstrecke 10 vorherrschende Druck p_{z} größer als der halbe Eingangsdruck pₑ ist, wird mit dem Programmablauf A weiter verfahren, falls der Druck hingegen nicht größer als der halbe Eingangsdruck ist, wird in den Programmzweig zu Programm B übergegangen.

Sofern der Druck in der Prüfstrecke nach dem Ablauf der Wartezeit größer als der halbe Eingangsdruck ist, wird bei Schritt 60a festgestellt, dass das stromabwärts der Prüfstrecke liegende Druckventil V2 intakt ist. Dieses Ventil V2 wird in Schritt 65a zur Öffnungsstellung angesteuert, anschließend wird eine Öffnungszeit t_{L} von einigen Sekunden, hier etwa 2 Sekunden abgewartet und das Ventil in Schritt 75a wieder in die Schließstellung angesteuert. In Schritt 80a wird die Messzeit t_{M} abgewartet und anschließend, in Schritt 85a, bestimmt, ob der Druck in der Prüfstrecke größer ist als der halbe Eingangsdruck. Ist dies der Fall, wird in Schritt 90a festgestellt, dass das Ventil V1 defekt ist, da eine Druckerhöhung der Prüfstrecke durch dieses Ventil stattgefunden hat. Ist der Druck der Prüfstrecke weiterhin kleiner als die Hälfte des Eingangsdrucks, wird bei Schritt 95a die Funktionstüchtigkeit auch des Ventils V1 festgestellt.

Das Programm B, welches beim anfänglichen Übersteigen des Drucks in der Prüfstrecke vom halben Eingangsdruck ausgewählt wird, verläuft analog, allerdings wird in Schritt 60b zunächst auf die ordnungsgemäße Funktion des Ventils V1 geschlossen. Nach Öffnen und Schließen des Ventils V1 in den Schritten 65b, 70b und 75b wird die Messzeit 80b absolviert und anschließend geprüft, ob das Ventil V2 die Dichtheitsanforderungen erfüllt und der Druck in der Prüfstrecke aufrechterhalten wird.

Es ist erkennbar, dass die Dichtheitskontrolle aufgrund der Verwendung eines Druckwächters, eingestellt auf den halben Eingangsdruck eine erhebliche Zeitdauer in Anspruch nehmen kann, insbesondere wenn größere Volumen zu prüfen sind.

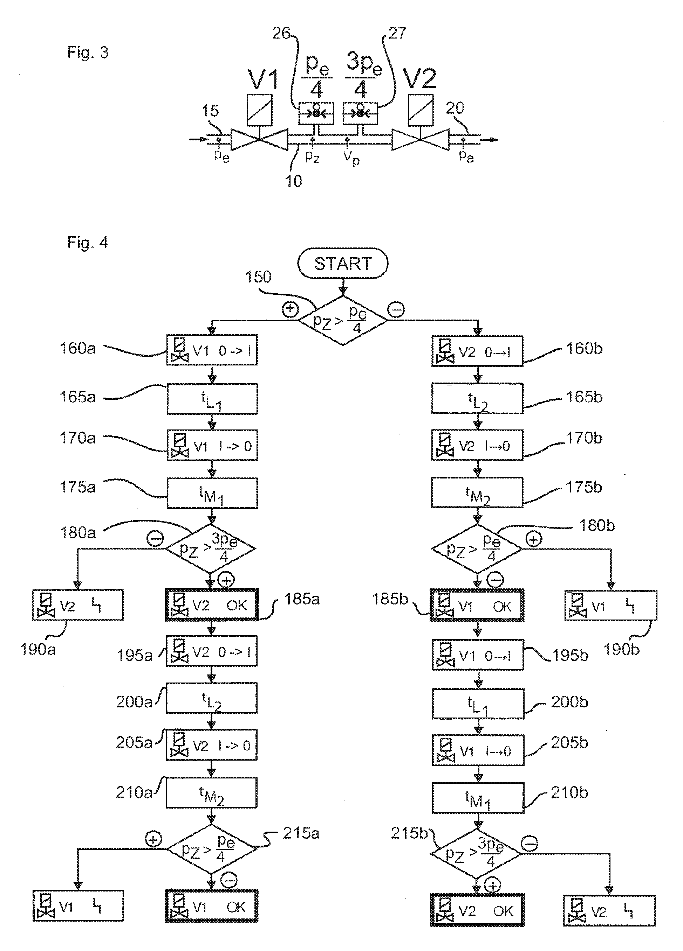

Gemäß der Erfindung wird daher das in Figur 3 gezeigte Konzept vorgeschlagen, welches zwei Drucksensoren verwendet, die symmetrisch um den halben Eingangsdruck mit ihren Schaltpunkten eingestellt sind. In diesem Beispiel ist der eine Drucksensor 26 auf einem Schaltpunkt pₑ/4 eingestellt während der andere Drucksensor 27 auf den Schaltpunkt 3/4pₑ eingestellt ist.

Figur 4 zeigt einen entsprechenden Ablauf des erfindungsgemäßen Verfahrens. Nach dem Start des Verfahrens wird in Schritt 150 geprüft, ob der Drucksensor 26 anzeigt, dass der im Prüfvolumen V_{P} vorherrschende Druck p_{z} größer als 1/4 des Eingangsdrucks pₑ ist. Ist dies der Fall, wird im linken Zweig des Programms fortgefahren.

In diesem Fall wird das Ventil V1 mit Schritt 160a geöffnet, bei Schritt 165a für eine Öffnungsdauer t_{L1} (z.B. für einige Sekunden) offengehalten und bei Schritt 170a wieder geschlossen. Anschließend verstreicht eine Messdauer t_{M1} bei Schritt 175a. Diese Messdauer wird in Abhängigkeit von dem Aufbau der Einrichtung und den gültigen Vorschriften festgelegt. In Abhängigkeit von dem maximalen Volumenstrom durch die Gaszuleitung, vom Eingangsdruck und weiteren Parametern wird bei der Vorgabe der Messdauer festgestellt, welcher Druckabfall pro Zeit mit gesetzlichen Vorschriften vereinbar ist. Diese zeitliche Vorgabe wird auf die Schaltpunkte der Einrichtung, die symmetrisch um den halben Eingangsdruck angelegt sind, umgerechnet. Entsprechende Berechnungsmethoden sind dem Fachmann bekannt. Die Messdauer t_{M1} in Schritt 175a ist demnach eine gegenüber der Messdauer aus Figur 2 in Schritt 80a und 80b deutlich verkürzte Messdauer, da nur eine geringere absolute Druckveränderung überwacht wird. Wird in Schritt 180a festgestellt, dass der im Prüfvolumen herrschende Druck p_{z} weiterhin größer als 3/4 des Eingangsdrucks ist, wird die fehlerlose Funktion des Ventils V2 bei 185a festgestellt, denn ein defektes Ventil V2 hätte in der Messzeit t_{M} bei der anliegenden Druckdifferenz zwischen p_{z} und pₐ eine Leckage gezeigt, welche den Druck p_{z} unter den Wert von ¾ pₑ hätte absinken lassen. Ist das Kriterium in Schritt 180a jedoch nicht erfüllt, wird die Fehlfunktion von V2 bei 190a festgestellt und das Verfahren mit einer Fehlermeldung beendet.

Nach Schritt 185a wird in Schritt 195a das Ventil V2 zur Öffnung angesteuert und die Öffnung in Schritt 200a eine Öffnungsdauer t_{L2} (z.B. 2 Sekunden) gehalten, um einen Druckausgleich zwischen dem Volumen V_{P} und der Ausgangsseite zu ermöglichen. In Schritt 205a wird das Ventil V2 wieder geschlossen und eine Messzeit t_{M2} wird in Schritt 210a abgewartet. Nun wird mittels des Sensors 26 festgestellt, ob der im Prüfvolumen vorliegende Druck größer ist als ¼ des Eingangsdrucks, was auf ein defektes Ventil V1 hinweisen würde. Da jedoch hier der Druckanstieg von ¼ des Eingangsdrucks detektiert wird und nicht, wie weiter oben geschildet, von der Hälfte des Eingangsdrucks, beträgt die Messzeit T_{M2} in Schritt 210a erneut deutlich weniger als die oben in Figuren 1 und 2 erforderliche Messzeit t_{M}.

Es ist klarzustellen, dass die Verkürzung der Messzeit bei gleichbleibender Sicherheit nur auf die Anordnung von mehreren Drucksensoren zurückzuführen ist, welche symmetrisch um den halben Eingangsdruck verteilte Schaltpunkte aufweisen.

Der rechte Zweig des Verfahrens in Figur 4 wird absolviert, wenn anfänglich das Vorliegen eines geringen Drucks im Prüfvolumen festgestellt wurde. Es wird dann mit der Prüfung des Ventils V1 begonnen und nachgeordnet die Funktionsfähigkeit des Ventils V2 geprüft. Die Schritte 195a bis 210a entsprechen hierbei den Schritten 160b bis 175b. Die Schritte 195b bis 215b entsprechen andererseits den Schritten 160a bis 180a.

Es ist ersichtlich, dass die erfindungsgemäße Vorgehensweise eine deutliche Verkürzung des Dichtheitsprüfungsverfahrens herbeiführt, ohne auf die Einhaltung der Sicherheitsrichtlinien zu verzichten oder deren Prüfung zu verschlechtern. Vielmehr wird das gesamte System sensibler und reagiert auf das Vorliegen von Undichtheiten noch zuverlässiger. Es ist angesichts der Figur 3 und Figur 4 dem Fachmann klar, dass ein Druckanstieg z.B. bei einem undichten Ventil V1 im Volumen V_{P} auf 1/4 des Eingangsdrucks rascher erfolgt als von 1/4 auf 1/2 des Eingangsdrucks. Die Dauer für einen Druckausgleich hängt ja von der Differenz der auszugleichenden Drücke ab. Daher kann mit dem beschriebenen erfindungsgemäßen Verfahren eine äußerst sensible und zuverlässige, auf die individuellen Funktionen des Systems eingestellte Dichtheitsprüfung gewährleistet werden.

## Patentansprüche

1. Verfahren zum Prüfen einer Dichtheit von zwei ansteuerbaren Ventilen, wobei die Ventile an entgegengesetzten Enden eines Prüfvolumens angeordnet sind, wobei stromauf des Prüfvolumens, vor Ventil V1, ein Eingangsdruck pₑ anliegt und wobei stromab des Prüfvolumens, hinter Ventil V2, ein Ausgangsdruck pₐ anliegt, wobei pₑ>pₐ und wobei der Druck im Prüfvolumen gleich p_{z},
wobei eine Steuereinrichtung die Ventile zum Öffnen und Schließen ansteuert und wobei die Steuereinrichtung mit mindestens zwei Druckwächtern gekoppelt ist, die beide zur Drucküberwachung mit dem Prüfvolumen in Wirkverbindung stehen,
**gekennzeichnet durch** die Schritte,
Einstellen des ersten Druckwächters auf eine erste Auslöseschwelle d₁, wobei d₁=pₑ/x mit x≥3,
Einstellen des zweiten Druckwächters auf eine zweite Auslöseschwelle d₂, wobei d₂= pₑ(1-1/x),
wobei bei jeder Dichtheitskontrolle alternativ eine der folgenden zwei Schrittgruppen abgearbeitet wird:
erste Schrittfolge:
- ansteuern des Ventils V1, um dieses für eine Zeitdauer t_{L1} zu öffnen und anschließen zu sperren,
- abwarten einer Messdauer t_{M1},
- Abfragen des zweiten Druckwächter und Abbruch des Verfahrens mit Erkennung der Undichtheit des Ventils V2 falls p_{z}<d₂,
- ansteuern des Ventils V2, um dieses für eine Zeitdauer t_{L2} zu öffnen und anschließen zu sperren,
- abwarten einer Messdauer t_{M2},
- Abfragen des ersten Druckwächters und Abbruch des Verfahrens mit Erkennung der Undichtheit des Ventils V1 falls p_{z}>d₁;
zweite Schrittfolge:
- Ansteuern des Ventils V2, um dieses für eine Zeitdauer t_{L2} zu öffnen und anschließend zu sperren,
- Abwarten einer Messdauer t_{M2},
- Abfragen des ersten Druckwächters und Abbruch des Verfahrens mit Erkennung der Undichtheit des Ventils V1 falls p_{z}>d₁,
- Ansteuern des Ventils V1, um dieses für eine Zeitdauer t_{L1} zu öffnen und anschließend zu sperren,
- Abwarten einer Messdauer t_{M1},
- Abfragen des zweiten Druckwächters und Abbruch des Verfahrens mit Erkennung der Undichtheit des Ventils V2 falls p_{z}<d₂,
Anzeige der Funktionstüchtigkeit der Ventile, falls kein Abbruch des Verfahrens stattgefunden hat.

2. Verfahren nach Anspruch 1, wobei dann,
falls zu Beginn der Dichtheitskontrolle der erste Druckwächter ein Überschreiten der ersten Auslöseschwelle anzeigt, also p_{z}>d₁, die erste Schrittfolge abgearbeitet wird und dann,
falls zu Beginn der Dichtheitskontrolle der erste Druckwächter kein Überschreiten der ersten Auslöseschwelle anzeigt, also p_{z}<=d₁, die zweite Schrittfolge abgearbeitet wird.

3. Verfahren nach Anspruch 1 oder 2, wobei x<10.

4. Verfahren nach einem der Ansprüche 1 bis 3, wobei für die Messdauern gilt t_{M1}=t_{M2} und wobei für die Öffnungsdauern gilt t_{L1}=t_{L2}.

5. Verfahren nach einem der Ansprüche 1 bis 4, wobei nach Einstellung eines der Druckwächter eine automatische Einstellung des anderen Druckwächters mit identischem Parameter x erfolgt.

## Claims

1. A method for checking the leakproofness of two controllable valves, wherein the valves are disposed at opposite ends of a test volume, wherein an inlet pressure pₑ is present upstream of the test volume, in front of valve VI, and wherein an outlet pressure pₐ is present downstream of the test volume, behind valve V2, where pₑ>pₐ and wherein the pressure in the test volume is equal to p_{z},
wherein a control device triggers the valves for the opening and closing and wherein the control device is coupled with at least two pressure switches which are both in an operative connection with the test volume for the pressure monitoring,
**characterised by** the steps of
setting the first pressure switch to a first triggering threshold d₁, wherein d₁=pₑ/x where x≥3,
setting the second pressure switch to a second triggering threshold d₂, wherein d₂=pₑ (1-1/x),
wherein one of the following two groups of steps is alternatively executed with each leakproofness check:
first step sequence:
- triggering of valve V1 in order to open the latter for a time period t_{L1} and then to close it,
- awaiting a measurement period t_{M1},
- checking the second pressure switch and abortion of the process with the recognition of the leakage of valve V2 if p_{z}<d₂,
- triggering of valve V2 in order to open the latter for a time period t_{L2} and then to close it,
- awaiting a measurement period t_{M2},
- checking the first pressure switch and abortion of the process with the recognition of the leakage of valve V1 if p_{z}>d₁;
second step sequence:
- triggering of valve V2 in order to open the latter for a time period t_{L2} and then to close it,
- awaiting a measurement period t_{M2},
- checking the first pressure switch and abortion of the process with the recognition of the leakage of valve V1 if p_{z}>d₁,
- triggering valve V1 in order to open the latter for a time period t_{L1} and then to close it,
- awaiting a measurement period t_{M1},
- checking the second pressure switch and abortion of the process with the recognition of the leakage of valve V2 if p_{z}<d₂,
indication of the functionality of the valves if no abortion of the process has taken place.

2. The method according to claim 1, wherein the first step sequence is executed if, at the start of the leakproofness check, the first pressure switch indicates that the first triggering threshold has been exceeded, i.e. P_{z}>d₁, and
the second step sequence is executed if, at the start of the leakproofness check, the first pressure switch indicates that the first triggering threshold has not been exceeded, i.e. P_{z}<=d₁.

3. The method according to claim 1 or 2, wherein x<10.

4. The method according to any one of claims 1 to 3, wherein t_{M1}=t_{M2} applies to the measurement periods and wherein t_{L1}=t_{L2} applies to the opening periods.

5. The method according to any one of claims 1 to 4, wherein, after the setting of one of the pressure switches, automatic setting of the other pressure switch takes place with an identical parameter x.

## Revendications

1. Procédé pour vérifier une étanchéité de deux soupapes pouvant être commandées, les soupapes étant disposées à des extrémités opposées d'un volume à contrôler, moyennant quoi une pression d'entrée pₑ est présente en amont du volume à contrôler, devant la soupape V1, et moyennant quoi une pression de sortie pₐ est présente en aval du volume à contrôler, derrière la soupape V2, moyennant quoi pₑ>pₐ et moyennant quoi la pression dans le volume à contrôler est égale à p_{z},
dans lequel un dispositif de commande assurant la commande des soupapes pour leur ouverture et fermeture et le dispositif de commande étant couplé à au moins deux manostats, lesquels sont tous deux en liaison fonctionnelle avec le volume à contrôler afin de surveiller la pression,
**caractérisé par** les étapes suivantes,
réglage du premier manostat à un premier seuil de déclenchement d₁, où d₁ = pₑ/x avec x≥3,
réglage du deuxième manostat à un deuxième seuil de déclenchement d₂, où d₂ = pₑ(1-1/x),
moyennant quoi, lors de chaque vérification de l'étanchéité, on exécute tour à tour l'un des deux groupes d'étapes suivants:
première succession d'étapes:
- commande de la soupape V1 afin de l'ouvrir pendant une durée t_{L1} et la fermer ensuite,
- attendre pendant le temps d'une mesure t_{M1},
- interrogation du deuxième manostat et interruption du procédé en cas de reconnaissance de l'absence d'étanchéité de la soupape V2 si p_{z}<d₂,
- commande de la soupape V2 afin de l'ouvrir pendant une durée t_{L2} et la fermer ensuite,
- attendre pendant le temps d'une mesure t_{M2},
- interrogation du premier manostat et interruption du procédé en cas de reconnaissance de l'absence d'étanchéité de la soupape V1 si p_{z}>d₁,
deuxième succession d'étapes:
- commande de la soupape V2 afin de l'ouvrir pendant une durée t_{L2} et la fermer ensuite,
- attendre pendant le temps d'une mesure t_{M2},
- interrogation du premier manostat et interruption du procédé en cas de reconnaissance de l'absence d'étanchéité de la soupape V1 si p_{z}>d₁,
- commande de la soupape V1 afin de l'ouvrir pendant une durée t_{L1} et la fermer ensuite,
- attendre pendant le temps d'une mesure t_{M1},
- interrogation du deuxième manostat et interruption du procédé en cas de reconnaissance de l'absence d'étanchéité de la soupape V2 si p_{z}<d₂,
indication du bon fonctionnement des soupapes s'il n'y a pas eu d'interruption du procédé.

2. Procédé selon la revendication 1, dans lequel ensuite,
dans le cas où au début de la vérification de l'étanchéité, le premier manostat indique un dépassement du premier seuil de déclenchement, à savoir que p_{z}>d₁, on exécute la première succession d'étapes et ensuite,
dans le cas où au début de la vérification de l'étanchéité, le premier manostat n'indique pas de dépassement du premier seuil de déclenchement, à savoir que p_{z}<=d₁, on exécute la deuxième succession d'étapes.

3. Procédé selon les revendications 1 ou 2, dans lequel x<10.

4. Procédé selon l'une des revendications 1 à 3, dans lequel t_{M1}=t_{M2} s'applique pour les temps de mesure, et dans lequel t_{L1}=t_{L2} s'applique pour les durées d'ouverture.

5. Procédé selon l'une des revendications 1 à 4, dans lequel, après le réglage de l'un des manostats, il s'en suite un réglage automatique de l'autre manostat avec un paramètre x identique.
